# EUROPÄISCHE PATENTSCHRIFT

(11) **EP 2 564 674 B1**
(45) Veröffentlichungstag und Bekanntmachung des Hinweises auf die Patenterteilung: **04.06.2014**
(21) Anmeldenummer: 11714282.8
(22) Anmeldetag: 13.04.2011
(51) Int. Cl.: H05B 41/04, H05B 41/288, H05B 41/38

(54) **VERFAHREN UND ANSTEUERSCHALTUNG FÜR DEN START EINER GASENTLADUNGSLAMPE**
METHOD AND CONTROL CIRCUIT FOR STARTING A GAS-DISCHARGE LAMP
PROCÉDÉ ET CIRCUIT DE COMMANDE POUR LA MISE EN MARCHE D'UNE LAMPE À DÉCHARGE GAZEUSE

(30) Priorität: 27.04.2010 DE 102010018325
(43) Veröffentlichungstag der Anmeldung: 06.03.2013
(73) Patentinhaber: Automotive Lighting Reutlingen GmbH, 72762 Reutlingen (DE)
(72) Erfinder: KLUETZ, Peter, 72770 Reutlingen (DE); LAUBENSTEIN, Ruediger, 72760 Reutlingen (DE); JOHANN, Christian, 72770 Reutlingen (DE); MOOSMANN, Bjoern, 72581 Dettingen (DE); HERRMANN, Michael, 72762 Reutlingen (DE); RODER, Matthias, 72766 Reutlingen (DE)
(74) Vertreter: DREISS Patentanwälte PartG mbB
(86) Internationale Anmeldenummer: PCT/EP2011/055831
(87) Internationale Veröffentlichungsnummer: WO 2011/134796

(56) Entgegenhaltungen:
- WO-A1-03/077614
- WO-A1-2008/123274
- US-A- 4 350 930

## Beschreibung

Die vorliegende Erfindung betrifft ein Verfahren nach dem Oberbegriff des Anspruchs 1 sowie eine Ansteuerschaltung nach dem Oberbegriff des unabhängigen Vorrichtungsanspruchs.

Ein solches Verfahren und eine solche Ansteuerschaltung ist jeweils per se bekannt. Beim Betrieb einer Gasentladungslampe, insbesondere einer für die Verwendung in Beleuchtungseinrichtungen von Straßenkraftfahrzeugen eingerichteten Gasentladungslampe, wird ein Lichtbogen zwischen zwei Elektroden in einem mit Gas gefüllten Glaskolben erzeugt. Beim Übergang vom ausgeschalteten Zustand ohne Lichtbogen in einen stabil Licht erzeugenden Zustand sind mehrere Phasen unterscheidbar, die als Zündung, Übernahme und Anlauf bezeichnet werden. Daran schließt sich der Normalbetrieb mit stabil brennendem Lichtbogen an.

Für die Zündung wird zunächst ein Zündspannungsimpuls an die Elektroden angelegt. Der Zündspannungsimpuls ist sehr kurz und führt zu einer Ionisierung von Gasteilchen im elektrischen Feld zwischen den Elektroden. Die Höhe der impulsförmigen Zündspannung liegt bei handelsüblichen Gasentladungslampen für KFZ-Scheinwerfer zwischen 20 und 30 Kilovolt.

In einer als Übernahme bezeichneten Phase wird anschließend eine in einem Booster-Kondensator gespeicherte Energie dazu verwendet, die ionisierten Gasteilchen so stark zu beschleunigen, dass sich durch Stoßionisationen ein lawinenartiger Ladungsdurchbruch zwischen den Elektroden einstellt, der den Lichtbogen zündet und aufrechterhält.

Dabei nimmt die Spannung des vorher auf ca. 400 Volt aufgeladenen Booster-Kondensators auf eine sich im stabilen Betrieb einstellende Brennspannung ab. Für Hg-haltige Lampen liegt diese bei ca. 80 Volt. Hg-freie Lampen werden mit einer Brennspannung von 43 Volt betrieben. Allgemein gilt, dass die Brennspannung je nach Ausführung der Lampe zwischen 30 Volt und 120 Volt liegen kann. Die Übernahmephase ist zum Beispiel einige hundert Mikrosekunden lang.

Im Anschluss an die Übernahme erfolgt ein Anlauf der Gasentladungslampe mit einem vorübergehenden Gleichstrombetrieb, der dem schnellen Aufheizen der Elektroden dient Eine typische Länge einer Gleichstromphase liegt bei 50 Millisekunden. An eine erste Gleichstromphase schließt sich in der Regel eine zweite Gleichstromphase gleicher Länge mit umgekehrter Polarität an.

Anschließend wird die Gasentladungslampe im Normalbetrieb mit einer Wechselspannung mit einer Frequenz von 250 Hz bis 800 Hz, insbesondere ca. 400 Hz und einem von der Ausführung der Lampe abhängigen Wert der Brennspannung zwischen den beiden Elektroden betrieben, der zwischen 30 und 120 Volt liegt. Der Betrieb mit Wechselspannung dient einer Begrenzung eines Elektrodenabbrandes.

In diesem Zusammenhang betrifft die Erfindung die als Übernahme bezeichnete Phase der Entladung des Booster-Kondensators, mit der die Energie für den Lawinendurchbruch infolge einer Ladungsbeschleunigung und Stoßionisation bereitgestellt wird. Der Begriff der Übernahme bezeichnet den Übergang in den Lichtbogen.

Das Übernahmeverhalten von Gasentladungslampen hängt unter anderem von der während der Übernahmephase bereitgestellten Energiemenge ab. Für eine sicher reproduzierbare Übernahme, das heißt für einen zuverlässig erfolgenden Aufbau des Lichtbogens, ist es erforderlich, dass die Zeitdauer des Stromflusses des Entladestroms aus dem Booster-Kondensator einen vorbestimmten Mindestwert überschreitet und dass die Stromstärke des Entladestroms in dieser Zeitdauer weder einen vorbestimmten Mindestwert unterschreitet noch einen vorbestimmten Maximalwert überschreitet.

Die Begrenzung auf einen Maximalwert dient dem Schutz der Gasentladungslampe und der den Entladestrom führenden Schaltungskomponenten vor einer unzulässig hohen Strombelastung. Das Nicht-Unterschreiten des Mindestwerts und der Mindestzeitdauer ist dagegen erforderlich, um ein Erlöschen des Lichtbogens nach der Entladung des Booster-Kondensators zu vermeiden.

Beim Übergang vom ausgeschalteten Zustand ohne Lichtbogen in einen stabil Licht erzeugenden Zustand der Gasentladungslampe wird der Booster-Kondensator in der dem Zündspannungsimpuls nachfolgenden Übernahmephase über einen Strompfad entladen, der den durch die Gasentladungslampe fließenden Strom führt und in dem eine Induktivität mit wenigstens einem Schalter in Reihe liegt. Beim Stand der Technik wird diese Induktivität von der Sekundärinduktivität eines den Zündimpuls bereitstellenden Zündübertragers gebildet, und der

Entladestrom fließt über einen in Reihe mit dem Booster-Kondensator geschalteten Entladewiderstand ab. Der Booster-Kondensator liegt damit als Energiequelle an einer Reihenschaltung aus dem Entladewiderstand und der Gasentladungslampe. Der Entladewiderstand erhöht damit den Widerstand im Entladestromkreis, was die Entladung zeitlich streckt und die Höhe des Entladestroms verringert.

Bei einer solchen Schaltung teilt sich die im Booster-Kondensator gespeicherte Energie bei der Entladung im Verhältnis der Impedanzen von Entladewiderstand und Gasentladungslampe auf den Entladewiderstand und die Gasentladungslampe auf. Der Energieanteil des Entladewiderstands wird dort in Wärme umgewandelt und steht damit nicht für den Aufbau und die Aufrechterhaltung des Lichtbogens zur Verfügung. Bei einem Kaltstart der Gasentladungslampe besitzt diese einen im Vergleich zum Entladewiderstand geringen Wert, so dass der größte Teil der gespeicherten Energie im Entladewiderstand nutzlos in Wärme umgewandelt wird.

Eine passende Dimensionierung des Entladewiderstandes gestaltet sich vor allem bei einer erweiterten Umgebungstemperatur der Widerstände von 150°C als technisch und wirtschaftlich schwierig.

Vor diesem Hintergrund besteht die Aufgabe der Erfindung in der Angabe eines Verfahrens und einer Ansteuerschaltung der jeweils eingangs genannten Art, die gewährleisten, dass der Gasentladungslampe unabhängig von deren Zustand, insbesondere von deren Typ, Alter, Hersteller und herstellungsbedingten Schwankungen von Eigenschaften eine für eine erfolgreiche Übernahme erforderliche Energie zugeführt wird, wobei die genannten technischen und wirtschaftlichen Schwierigkeiten, die mit der Dimensionierung eines oder mehrerer Entladewiderstände verbunden sind, nicht auftreten.

Diese Aufgabe wird jeweils mit den Merkmalen eines der unabhängigen Ansprüche gelöst. In ihren Verfahrensaspekten sieht die Erfindung vor, dass der Booster-Kondensator durch ein mehrmalig abwechselndes Schließen und Öffnen des Schalters getaktet entladen wird.

Entsprechend sieht die Erfindung in ihren Vorrichtungsaspekten vor, dass die Ansteuerschaltung dazu eingerichtet ist, den Booster-Kondensator durch ein mehrmalig abwechselndes Schließen und Öffnen des Schalters getaktet zu entladen.

Dadurch ergibt sich ein im Takt der Schalteransteuerung erfolgender Wechsel zwischen ansteigenden und abfallenden Werten der Entladestromstärke. Durch den Wechsel lässt sich eine gewünschte mittlere Entladestromstärke einstellen, die unterhalb eines vorbestimmten Grenzwertes liegt. Damit wird die Aufgabe der Strombegrenzung gelöst. Anders als der Entladewiderstand des Standes der Technik wandelt die Induktivität den auf sie entfallenden Teil der im Booster-Kondensator gespeicherten Energie nicht irreversibel in Wärme, sondern reversibel in magnetische Feldenergie um, die beim Öffnen des Schalters dazu verwendet wird, den Stromfluss durch die Gasentladungslampe auch bei geöffnetem Schalter aufrechtzuerhalten. Dadurch klingt der Stromfluss durch die Lampe bei geöffnetem Schalter nur verzögert ab.

Im Ergebnis wird damit der Vorteil erzielt, dass ein möglichst großer Teil der im Booster-Kondensator gespeicherten Energie für die Übernahme, das heißt für das Auslösen eines Lawinendurchbruchs und das Erzeugen eines stabilen Lichtbogens zwischen den Elektroden der Gasentladungslampe zur Verfügung steht. Mit anderen Worten: Durch die Erfindung wird ein größerer Teil der im Booster-Kondensator gespeicherten Energie an die Gasentladungslampe übertragen als beim Stand der Technik.

Die beteiligten Bauelemente sind im Vergleich zu den Entladewiderständen des Standes der Technik einer geringeren thermischen Belastung ausgesetzt und können für eine geringere Stromtragfähigkeit und damit kleiner und preiswerter dimensioniert werden.

Auch der Booster-Kondensator kann aufgrund der besseren Energieausnutzung verkleinert werden. Statt der nach heutigem Stand der Technik eingesetzten Folienkondensatoren können auch andere Kondensatortypen wie beispielsweise Elektrolytkondensatoren oder Keramik-Schichtkondensatoren eingesetzt werden. Ein Nachteil von Keramikkondensatoren besteht darin, dass sie bei hohen Spannungen nur noch weniger als 40 % ihrer Kapazität bei niedrigeren Spannungswerten aufweisen. Das kann durch die höhere Effizienz der getakteten Entladung kompensiert werden.

Außerdem steigt der Entladestrom direkt nach dem Zünden schneller an als beim Stand der Technik. Dies wirkt sich positiv auf das Übernahmeverhalten aus. Der bei Heißzündung im Mittel deutlich höhere Übernahmestrom wirkt sich positiv auf das Heißzündverhalten aus. Die Möglichkeit der Einflussnahme auf den zeitlichen Verlauf des Übernahmestroms durch Änderung von Taktfrequenz und/oder dessen Tastverhältnisses stellt ebenfalls einen Vorteil dar.

Die zeitliche Steuerung der getakteten Booster-Entladung ist prinzipiell bereits ohne aufwändige Zusatzbeschaltung durch einen zeitgesteuerten Taktgeber möglich.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Dabei bezeichnen gleiche Bezugszeichen in den verschiedenen Figuren jeweils gleiche Elemente. Es zeigen, jeweils in schematischer Form:
Fig. 1 ein erstes Ausführungsbeispiel einer erfindungsgemäßen Ansteuerschaltung;
Fig. 2 Verläufe des Entladestroms des Booster-Kondensators bei Schaltungen nach dem Stand der Technik und nach der Erfindung zur Verdeutlichung des erfindungsgemäßen Verfahrens; und
Fig. 3 ein zweites Ausführungsbeispiel einer erfindungsgemäßen Ansteuerschaltung.

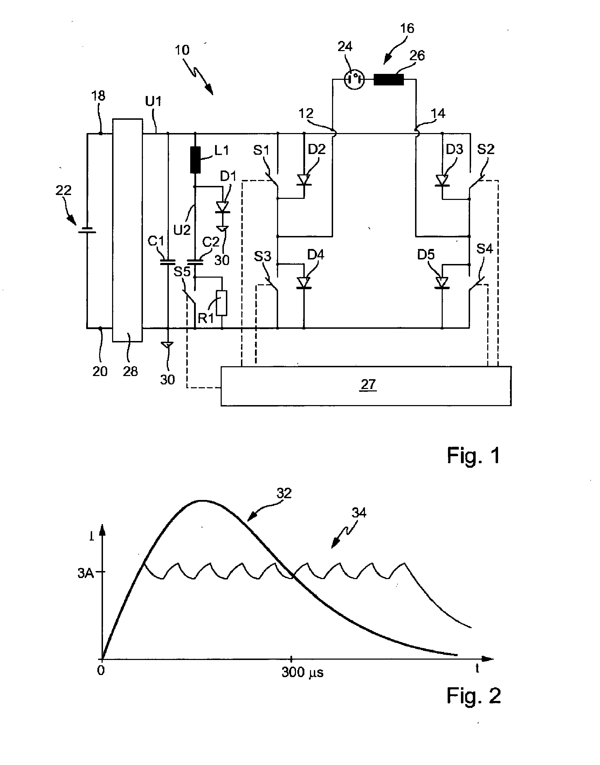

Im Einzelnen zeigt die Figur 1 eine Ansteuerschaltung 10, die über Anschlüsse 12, 14 an eine Gasentladungslampe 16 und über Anschlüsse 18, 20 an eine elektrische Energieversorgung 22 angeschlossen ist. Bei der Gasentladungslampe 16 handelt es sich in einer bevorzugten Ausgestaltung um eine Gasentladungslampe einer Kraftfahrzeugbeleuchtungseinrichtung, insbesondere um eine Lampe vom D1- oder D3- oder D5-Typ mit integriertem Zündgerät. Die Erfindung ist aber auch bei Lampen vom D2, D4 oder D6-Typ mit externem Zündgerät verwendbar. Die elektrische Energieversorgung 22 ist in diesem Fall eine Stromquelle oder einen Spannungsquelle im elektrischen Bordnetz des Kraftfahrzeugs, z. B. eine Fahrzeugbatterie.

In der dargestellten Ausgestaltung weist die Gasentladungslampe 16 einen Brenner 24, d. h. einen mit Gas gefüllten Glaskolben mit zwei Elektroden und ein integriertes Zündgerät auf, von dem die Figur 1 eine Sekundärinduktivität 26 eines Zündtransformators zeigt. Die Sekundärinduktivität 26 liegt mit dem Brenner 24 in Reihe in dem Strompfad zwischen den Anschlüssen 12 und 14 und ist dazu eingerichtet, als Reaktion auf eine entsprechende Anregung durch ein Magnetfeld einer nicht dargestellten Primärwicklung des Zündtransformators einen Zündspannungsimpuls in der Höhe von mehreren kV, insbesondere in der Höhe von 20 bis 30 kV, zu erzeugen.

Der Stromfluss über den Brenner 24 wird von einem Steuermodul 27 der Ansteuerschaltung 10 gesteuert, das dazu verschiedene über die Schalter S1 bis S5 verlaufende Strompfade schließt. Ein DC/DC-Wandler lädt die Kondensatoren C1 und C2 vor einem Einschalten der Gasentladungslampe 16 auf einen ersten Wert einer Spannung U1 auf und stellt bei stabil brennendem Lichtbogen der Gasentladungslampe 16 einen stabilen zweiten Wert der Spannung U1 bereit.

Das Steuermodul 27 ist dazu eingerichtet, den Ablauf des erfindungsgemäßen Verfahrens oder einer seiner Ausgestaltungen zu steuern. In einer Ausgestaltung ist das Steuermodul 27 ein integrierter Schaltkreis mit Rechen- und Speicherkapazitäten, der dazu programmiert ist, ein solches Verfahren zu steuern.

In einer bevorzugten Ausgestaltung beträgt der erste Wert etwa 400V. Der zweite Wert, also die Brennspannung, liegt je nach Ausführung der Lampe zwischen 30 Volt und 120 Volt. In der dargestellten Ausgestaltung ist die Spannung U1 gegenüber der Masse 30 negativ. Das Prinzip der angegebenen Schaltung ist jedoch auch für positive Spannungen U1 verwendbar. In diesem Fall sind jedoch die Freilaufdioden D1, D2, D3, D4 und D5 in umgekehrter Richtung anzuschließen. Der Kondensator C2 ist der Booster-Kondensator. Der Kondensator C1 ist ein Glättungskondensator.

Der Widerstand R1 ist ein Ladewiderstand für den Booster-Kondensator C2 und wird bei geschlossenem Schalter S5 überbrückt. Er trägt daher nicht den Entladestrom und ist insofern nicht mit dem Entladewiderstand aus dem Stand der Technik zu vergleichen, der dort den Entladestrom führt und damit im Booster-Kondensator C2 gespeicherte Energie in Wärme umwandelt.

In Bezug auf seine den Entladestrom begrenzende und die Zeitdauer der Entladung damit zeitlich streckende Funktion wird der Entladewiderstand bei der in der Figur 1 dargestellten Ausgestaltung einer erfindungsgemäßen Ansteuerschaltung 10 durch die Induktivität L1 zusammen mit dem in Reihe mit der Induktivität L1 in dem Entladestrompfad liegenden Schalter S5 sowie durch das den Schalter S5 getaktet öffnende und schließende Steuermodul 27 ersetzt.

Im Folgenden wird das Verhalten der dargestellten Ansteuerschaltung 10 in Bezug auf die Übernahmephase beschrieben. Die Schalter S5, S1 und S4 werden in einem ersten Verfahrensschritt vor der Zündung geschlossen. Die Schalter S2 und S3 sind offen.

Am Wandlerausgang herrscht zunächst eine Spannung von ca. 400 Volt. U1 ist gegenüber dem mit dem Dreieck 30 bezeichneten Bezugspotenzial negativ. Der Booster-Kondensator C2 ist auf diese Spannung aufgeladen. Es fließt kein Strom über die Induktivität L1.

Als Folge eines kurzen Hochspannungszündimpulses ist die Gasentladungslampe 16 in der Lage, einen Strom zwischen ihren beiden Elektroden zu führen. Durch den Stromfluss bricht die Spannung U1 zusammen. Das U1-seitige obere Ende der Induktivität L1 wird gegenüber dem C2-seitigen unteren Ende positiv, so dass sich über der Induktivität L1 eine Spannung einstellt. Die Spannung treibt einen Strom durch die Induktivität L1, der aus dem Booster-Kondensator C2 gespeist wird. Die Ladung und damit die gespeicherte Energie des Booster-Kondensators C2 verringert sich. Der Energieverlust des Booster-Kondensators C2 teilt sich auf die Gasentladungslampe 16 und das Magnetfeld der Induktivität L1 auf.

Anders als beim Stand der Technik, bei dem der nicht in die Gasentladungslampe fließende Energieanteil im Ohm'schen Entladewiderstand irreversibel in Wärme umgewandelt wird, erfolgt hier eine reversible Speicherung von Energie im Magnetfeld der Induktivität L1.

Bevor die Stromstärke des Entladungsstroms auf kritische Werte ansteigen kann, wird in einen weiteren Verfahrensschritt ein Schalter im Entladungsstromkreis, zum Beispiel der Schalter S5, wieder geöffnet. Das Magnetfeld der Induktivität L1 bricht dann zusammen, was durch die Induktionswirkung dazu führt, dass der Stromfluss durch die Induktivität L1 nur verzögert zurückgeht, wobei dieser Strom bei geöffnetem Schalter S5 über die Freilaufdiode D1 an das Bezugspotenzial abfließt. Sobald die zurückgehende Entladungsstromstärke hinreichend weit abgesunken ist, wird der Schalter S5 in einem weiteren Verfahrensschritt wieder geschlossen. Der Entladungsstrom steigt wieder an, ein Magnetfeld baut sich auf, und so weiter. Im Ergebnis erfolgt eine getaktete Entladung des Booster-Kondensators C2, bei der der größte Teil der kapazitiv gespeicherten Energie innerhalb der Übernahmephase für die Erzeugung und Stabilisierung des Lichtbogens im Brenner 24 verwendet werden kann.

Durch dieses Verfahren und durch Wahl einer entsprechenden Ein- und Ausschaltzeit des Schalters S5 kann der durch die Lampe fließende Übernahmestrom in den vorgegebenen Grenzen frei eingestellt werden, so dass ein vorbestimmter Maximalwert nicht überschritten wird und ein zeitbereichsabhängiger Minimalwert, der zur Aufrechterhaltung des Lichtbogens benötigt wird, nicht unterschritten wird.

Dieses Grundprinzip kann für positive wie negative Werte der Ausgangsspannung U1 des DC/DC-Wandlers angewendet werden. Die dargestellte Ansteuerschaltung 10 ist für negative Werte von U1 eingerichtet. Für positive Werte von U1 müssen die Freilaufdioden D1, D2, D3, D4 und D5 mit entgegengesetzter Polarität eingebaut werden.

Figur 2 zeigt in qualitativer Form einen Verlauf 32 des Entladestroms über der Zeit beim Stand der Technik im Vergleich zu einem Verlauf 34, wie er durch eine erfindungsgemäße Ansteuerschaltung in Verbindung mit dem erfindungsgemäßen Verfahren erzielt wird. Beim Verlauf 32 steigt der Entladestrom zunächst auf einen im Prinzip ungünstig hohen Maximalwert an, um anschließend vergleichsweise schnell abzufallen.

Beim Verlauf 34 wird der Anstieg, der abweichend von der Darstellung der Fig. 2 auch zunächst steiler und damit schneller erfolgen kann als der Anstieg 32, dagegen durch das Öffnen eines in Reihe mit der Induktivität L1 im Entladestrompfad liegenden Schalters bei einem niedrigeren Wert als dem Maximalwert des Verlaufs 32 unterbrochen. Anschließend wird dieser Schalter getaktet wieder geschlossen und geöffnet, so dass sich qualitativ das gezeigte Stromprofil 34 ergibt, bei dem eine mittlere Stromstärke über einen vergleichsweise längeren Zeitraum als beim Verlauf 32 gehalten wird. Für ein sicheres Übernahmeverhalten ist es günstig, dass diese mittlere Stromstärke für wenigstens etwa 300 µs gehalten wird und dabei ein Entladestrom von etwa 3 Ampere fließt. Aus einem Vergleich der Kurven 32 und 34 sieht man, dass diese Anforderungen durch das Stromprofil 34 besser erfüllt werden als durch das Stromprofil 32. Außerdem fehlt beim Verlauf 34 der ungünstig hohe Anfangsmaximalwert des Verlaufs 32, der zu einer starken thermischen Belastung eines Entladewiderstandes und anderer Komponenten im Entladestrompfad einschließlich der Gasentladungslampe 16 selbst führt.

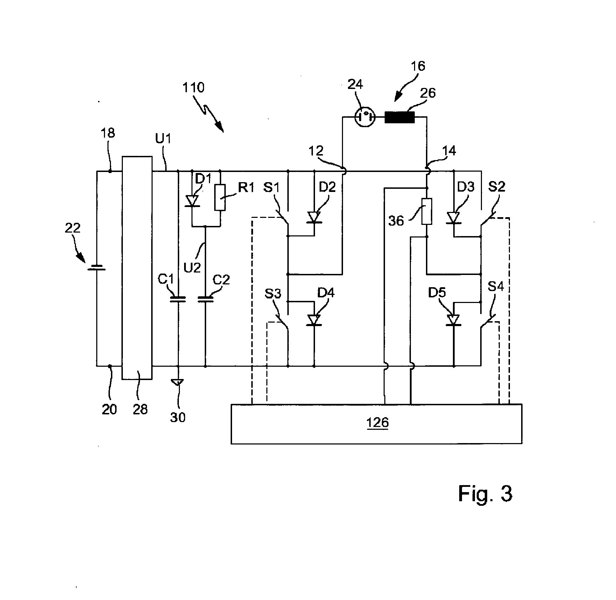

An die mit der Entladung des Booster-Kondensators C2 verbundene Übernahmephase folgt der Anlauf der Gasentladungslampe mit einem vorübergehenden Gleichstrombetrieb. Eine typische Länge einer Gleichstromphase liegt bei 50 Millisekunden. An eine erste Gleichstromphase schließt sich in der Regel eine zweite Gleichstromphase gleicher Länge mit umgekehrter Polarität an. Anschließend wird die Gasentladungslampe im Normalbetrieb mit einer Wechselspannung mit einer Frequenz von 250 Hz bis 800 Hz, insbesondere von ca. 400 Hz, und einer Brennspannung zwischen den beiden Elektroden betrieben, die je nach Ausführung der Lampe zwischen 30 Volt und 120 Volt liegt. Dazu wird zwischen einem Stromfluss, der über die Schalter S4 und S1 erfolgt, und einem alternativen Stromfluss, der über die Schalter S3 und S2 der H-Brücke aus den Schaltern S1, S2, S3, S4 erfolgt, alternierend umgeschaltet. Die Umschaltung erfolgt durch das Steuermodul 27, dass diese Schalter entsprechend öffnet und schließt. Die Schalter S1 bis S5 sind bevorzugt Transistoren. Der Betrieb mit Wechselspannung dient einer Begrenzung eines Elektrodenabbrandes. Dies gilt analog auch für den Gegenstand der Fig. 3.

Fig. 3 zeigt eine Ansteuerschaltung 110 als zweites Ausführungsbeispiel einer erfindungsgemäßen Ansteuerschaltung. Die Ansteuerschaltung 110 unterscheidet sich von der Ansteuerschaltung 10 der Fig. 1 dadurch, dass sie ohne eine separate Induktivität L1 und ohne einen separaten Schalter S5 zur getakteten Entladung des Booster-Kondensators C2 auskommt. Anstelle der Induktivität L1 der Ansteuerschaltung 10 aus der Fig. 1 dient hier die Sekundärinduktivität 26 des Zündübertragers sowie wenigstens einer der eine H-Brücke bildenden Schalter S1, S2, S3, S4 zur getakteten Entladung des Booster-Kondensators C2. In der Übernahmephase arbeitet die Schaltung 110 auf die im Folgenden beschriebene Weise.

Die Schalter S1 und S4 werden vor der Zündung geschlossen. Die Schalter S2 und S3 sind offen. Nach dem Zünden der Gasentladungslampe 16 Lampe bricht die aufgebaute Spannung U1 des DC/DC-Wandlers 28 aufgrund des durch den Lichtbogen verursachten Stromflusses durch den Brenner 24 ein. Dies führt zu einer Spannungsdifferenz über der Abkoppeldiode D1, welche zu leiten beginnt. Es liegt nun praktisch die Parallelschaltung vom Glättungs-Kondensator C1 und Booster-Kondensator C2 und damit die volle Ausgangsspannung U1 über die H-Brücke direkt am Zündteil an. Dies verursacht einen über der Zeit ansteigenden Strom durch den Brenner 24 und die Sekundärinduktivität 26 des Zündübertragers. Bei Erreichen eines Grenzstroms werden entweder beide stromführenden Schalter S1 und S4 oder, um einen Freilauf zu gewährleisten und eine Überspannung am C1-seitigen Ausgang des DC/DC-Wandlers 28 zu verhindern, nur der untere stromführende Schalter S4 geöffnet. Nun kann kein Strom mehr durch die H-Brücke fließen.

Im Folgenden wird zunächst der Fall betrachtet, dass die beiden Strom-führenden H-Brücken-Schalter S4 und S1 geöffnet werden. Die Sekundärinduktivität 26 treibt dann den Strom weiter durch die Freilaufdiode D3 des oberen geöffneten H-Brückenschalters S2 auf den Glättungs-Kondensator C1. Der Strom durch die Sekundärinduktivität 26 sinkt ab, bis die Schalter S1 und S4 wieder eingeschaltet werden. Es kann eine Überspannung auf dem Glättungs-Kondensator C1 auftreten.

Als Alternative wird im Folgenden der Fall betrachtet, dass nur der potenzialmäßig obere stromführende H-Brückenschalter S4 geöffnet wird und der potenzialmäßig untere Schalter S1 geschlossen bleibt. Dann treibt die Sekundärinduktivität 26 den Strom weiter durch die Freilaufdiode D3 des potenzialmäßig unteren geöffneten H-Brückenschalters S2 und den geschlossenen potenzialmäßig unteren H-Brückenschalter S1 wieder durch die Gasentladungslampe 16. Es entsteht keine Überspannung auf dem Glättungs-Kondensator 1, da der Stromkreis geschlossen ist. Der Strom durch die Gasentladungslampe 16 beginnt zu sinken. Nach einer gewissen Zeit wird der zuvor geöffnete Schalter S4 der H-Brücke wieder geschlossen. Der Strom durch die Gasentladungslampe 16 und damit sowohl durch den Brenner 24 als auch durch die Sekundärinduktivität 26 beginnt wieder zu steigen.

Eine weitere Ausgestaltung sieht vor, dass nur der potenzialmäßig untere stromführende H-Brückenschalter S1 geöffnet wird. In diesem Fall treibt die Sekundärinduktivität 26 den Strom weiter durch die Freilaufdiode D4 des potenzialmäßig oberen geöffneten H-Brückenschalters S3 und durch den geschlossenen potenzialmäßig oberen H-Brückenschalter S4 wieder durch die Gasentladungslampe 16. Es entsteht keine Überspannung auf dem Glättungs-Kondensator C1, da der Stromkreis geschlossen ist. Der Strom durch die Induktivität 26 bzw. durch den Brenner 24 beginnt zu sinken. Nach einer gewissen Zeit wird der zuvor geöffnete Schalter S1 der H-Brücke wieder geschlossen. Der Strom durch den Brenner 24 und die Sekundärinduktivität 26 beginnt wieder zu steigen.

Für jede dieser drei beschriebenen Ausgestaltungen gilt, dass der durch die Gasentladungslampe 16 fließende Übernahmestrom durch Wahl einer entsprechenden Ein- und Ausschaltzeit des Schalters S4 oder der Schalter S1 und S4 in den vorgegebenen Grenzen frei eingestellt werden kann. Dadurch wird erreicht, dass der Maximalwert nicht überschritten wird und der zeitbereichsabhängige Minimalwert, der zur Aufrechterhaltung des Lichtbogens benötigt wird, nicht unterschritten wird. Eine solche Zeitsteuerung wird in einer Ausgestaltung durch eine entsprechende Programmierung oder schaltungstechnische Realisierung der jeweils verwendeten Ansteuerschaltung realisiert. Dies gilt unabhängig von der speziellen Ausgestaltung, die in der Fig. 1 dargestellt ist.

Bei der Ansteuerschaltung 110, die die Sekundärinduktivität 26 des Zündkreises nutzt, kann die bei der Ansteuerschaltung 10 verwendete separate Induktivität L1 und der Schalter S5 entfallen. Das Grundprinzip der Ansteuerschaltungen 10, 110 ist sowohl für positive als auch für negative Ausgangsspannungen U1 des DC/DC-Wandlers 28 verwendbar. Mit der dargestellten Anschlussrichtung der Dioden D1 bis D5 ist die dargestellte Ansteuerschaltung 126 für gegenüber der Masse 30 negative Werte der Ausgangsspannung U1 des DC/DC-Wandlers 28 eingerichtet. Für positive Werte von U1 sind die Abkoppeldiode D1 und die Freilaufdioden D2, D3, D4 und D5 mit umgekehrter Fluss- und Sperrrichtung anzuschließen.

Im Übrigen arbeitet die Ansteuerschaltung 110 nach dem gleichen Grundprinzip der getakteten Entladung in Verbindung mit einer induktiven Energiespeicherung wie die Ansteuerschaltung 10. Insofern gelten insbesondere die Ausführungen zu Ausgestaltungen des Steuermoduls 26 der Fig. 1 auch für das Steuermodul 126 der Fig. 3.

Eine Ausgestaltung des Verfahrens sieht vor, dass die Stromstärke des Entladestroms gemessen wird und dass der wenigstens eine Schalter dann geöffnet wird, wenn die Stromstärke einen vorgegebenen ersten Schwellenwert überschreitet und geschlossen wird, wenn die Stromstärke einen vorgegebenen zweiten Schwellenwert unterschreitet.

Dabei wird der erste Schwellenwert in einer Ausgestaltung eines als Summe eines vorbestimmten Referenzwertes und eines Anteils einer vorgegebenen Schwankungsbreite bestimmt, und der zweite Schwellenwert wird als Differenz des Referenzwertes und eines vorgegebenen zweiten Schwellenwertes bestimmt.

Dadurch wird ein Hysterese-Verhalten erzeugt. Für eine Ansteuerung über einen Hystereseregler wird der Übernahmestrom durch die Lampe durch eine Messeinrichtung erfasst und mit einem Referenzsignal verglichen. Die Messeinrichtung wird in der Fig. 3 durch einen Messwiderstand 36 in Verbindung mit einer Auswertung der Spannung über dem Messwiderstand 36 in dem Steuermodul 126 realisiert. Analog sieht eine weitere Ausgestaltung vor, dass die Schaltung nach der Fig. 1 einen solchen Messwiderstand 36 in Verbindung mit einem zur Spannungsmessung eingerichteten Steuermodul 27 aufweist.

Der Schalter S5 in der Ansteuerschaltung 10 aus Fig. 1 oder der Schalter S4 bzw. die Schalter S1 und S4 in der Ansteuerschaltung 110 aus der Fig. 3 werden bei Erreichen der Summe aus Referenzwert und einem Teil, z. B. der Hälfte der Hysterese, abgeschaltet. Bei Unterschreiten des Referenzwertes abzüglich eines Teils der Hysterese, z. B. der Hälfte, wird der Schalter, bzw. die Schalter wieder eingeschaltet. Es ergibt sich im Mittel ein Stromfluss, der proportional zum Referenzwert ist. Der Referenzwert kann wiederum von anderen Parametern, wie der Ausgangsspannung U1 des DC/DC-Wandlers 28 und/oder der Restspannung U2 auf dem Booster-Kondensator C2 abhängig gemacht werden, oder mittels einer geeigneten Ansteuerungssoftware in beliebiger Weise gesteuert werden. Damit kann auch über einen längeren Zeitraum hinweg ein ausreichender Stromfluss durch die Gasentladungslampe 16 gewährleistet werden.

Eine weitere Ausgestaltung sieht vor, dass der wenigstens eine Schalter mit fester Frequenz und festem Tastverhältnis

geöffnet und geschlossen wird. In dieser Alternative zu der

Hystereseregelung werden der Schalter S5 in der Ansteuerschaltung 10 oder der Schalter S4, beziehungsweise die Schalter S1 und S4 in der Ansteuerschaltung 110 mit einer geeigneten festen Frequenz und einem geeigneten festen Tastverhältnis angesteuert. Durch geeignete Wahl des Tastverhältnisses und der Frequenz wird der Strom durch die Gasentladungslampe 16 auf maximal zulässige Werte begrenzt.

Durch die während der Übernahme einbrechende Spannung U1 sinkt bei festem Tastverhältnis und fester Frequenz der geschaltete Strom automatisch ab, was zu einem zeitlich abfallenden Übernahmestrom durch die Gasentladungslampe 16 führt. Damit kann auch über einen längeren Zeitraum hinweg ein ausreichender Stromfluss durch die Gasentladungslampe 16 gewährleistet werden.

Eine alternative Ausgestaltung sieht eine Ansteuerung mit variabler Frequenz und/oder variablem Tastverhältnis vor. Bei dieser Ausgestaltung werden der Schalter S5 in der Ansteuerschaltung 10 oder der Schalter S4, beziehungsweise die Schalter S1 und S4 in der Ansteuerschaltung 110 mit einer variablen Frequenz und/oder einem geeigneten variablen Tastverhältnis angesteuert. Durch geeignete Steuerung des Tastverhältnisses und/oder der Frequenz lässt sich der Übernahmestrom im zeitlichen Verlauf beliebig beeinflussen. Damit kann auch über einen längeren Zeitraum hinweg ein ausreichender Stromfluss durch die Gasentladungslampe Lampe gewährleistet werden.

Im Vergleich zu einer Ansteuerung mit fester Frequenz und festem Tastverhältnis ergeben sich bei variabler Ansteuerfrequenz und/oder variablem Tastverhältnis mehr Freiheitsgrade im zeitlichen Verlauf des Übernahmestroms. Im Gegensatz zur Ansteuerung mit fester Frequenz und festem Tastverhältnis ist zum Beispiel auch das Regeln auf einen im zeitlichen Mittel konstanten Wert des Entladestroms möglich.

## Patentansprüche

1. Verfahren zum Betreiben einer Gasentladungslampe (16) beim Übergang vom ausgeschalteten Zustand ohne Lichtbogen in einen stabil Licht erzeugenden Zustand, bei welchem Verfahren ein Booster-Kondensator (C2) in einer einem Zündspannungsimpuls nachfolgenden Übernahmephase über einen Strompfad entladen wird, der den durch die Gasentladungslampe (16) fließenden Strom führt und in dem eine Induktivität (L1) mit wenigstens einem Schalter (S5) in Reihe liegt, **dadurch gekennzeichnet, dass** der Booster-Kondensator (C2) durch ein mehrmalig abwechselndes Schließen und Öffnen des Schalters (S5) getaktet entladen wird.

2. Verfahren nach Anspruch 1, **dadurch gekennzeichnet, dass** der wenigstens eine Schalter (S5) für die getaktete Entladung zeitgesteuert geschlossen und geöffnet wird.

3. Verfahren nach Anspruch 2, **dadurch gekennzeichnet, dass** für die getaktete Entladung entweder nur einer oder aber beide stromführenden Schalter einer H-Brücke synchron betätigt werden.

4. Verfahren nach Anspruch 3, erste Alternative, **dadurch gekennzeichnet, dass** für die getaktete Entladung nur der potenzialmäßig obere stromführende Schalter einer H-Brückenschaltung betätigt wird.

5. Verfahren nach Anspruch 3, erste Alternative, **dadurch gekennzeichnet, dass** für die getaktete Entladung nur der potenzialmäßig untere stromführende Schalter einer H-Brückenschaltung betätigt wird.

6. Verfahren nach Anspruch 1, **dadurch gekennzeichnet, dass** die Stromstärke des Entladestroms gemessen wird und dass der wenigstens eine Schalter (S5) dann geöffnet wird, wenn die Stromstärke einen vorgegebenen ersten Schwellenwert überschreitet und geschlossen wird, wenn die Stromstärke einen vorgegebenen zweiten Schwellenwert unterschreitet.

7. Verfahren nach Anspruch 6, **dadurch gekennzeichnet, dass** der erste Schwellenwert als Summe eines vorbestimmten Referenzwertes und eines Anteils einer vorgegebenen Schwankungsbreite bestimmt wird und dass der zweite Schwellenwert als Differenz des Referenzwertes und eines vorgegebenen zweiten Schwellenwertes bestimmt wird.

8. Verfahren nach Anspruch 6 oder 7, **dadurch gekennzeichnet, dass** der Referenzwert in Abhängigkeit von einer Ausgangsspannung eines den Booster-Kondensators (C2) ladenden DC/DC-Wandlers (28) oder einer Restspannung (U2) über dem Booster-Kondensator (C2) vorbestimmt wird.

9. Verfahren nach Anspruch 1, **dadurch gekennzeichnet, dass** der wenigstens eine Schalter (S5) mit einer festen Frequenz und einem festen Tastverhältnis geöffnet und geschlossen wird.

10. Verfahren nach Anspruch 1, **dadurch gekennzeichnet, dass** der wenigstens eine Schalter (S5) mit einer variablen Frequenz und/oder einem variablem Tastverhältnis geöffnet und geschlossen wird.

11. Zum Betreiben einer Gasentladungslampe (16) beim Übergang vom ausgeschalteten Zustand ohne Lichtbogen in einen stabil Licht erzeugenden Zustand eingerichtete Ansteuerschaltung (10), die einen Booster-Kondensator (C2) aufweist und dazu eingerichtet ist, den Booster-Kondensator (C2) in einer einem Zündspannungsimpuls nachfolgenden Übernahmephase über einen Strompfad zu entladen, der den durch die Gasentladungslampe (16) fließenden Strom führt und in dem eine Induktivität (L1) mit wenigstens einem Schalter (S5) in Reihe liegt, **dadurch gekennzeichnet, dass** die Ansteuerschaltung (10) dazu eingerichtet ist, den Booster-Kondensator (C2) durch ein mehrmalig abwechselndes Schließen und Öffnen des Schalters (S5) getaktet zu entladen.

12. Ansteuerschaltung (10) nach Anspruch 11, **dadurch gekennzeichnet, dass** die Ansteuerschaltung (10) einen DC/DC Wandler (28) aufweist und dass die Induktivität (L1) in Reihe mit dem Booster-Kondensator (C2) und dem Schalter (S5) zwischen zwei Ausgangsklemmen des DC/DC-Wandlers (28) und parallel zu einer Reihenschaltung aus wenigstens einem Schalter (S4) und der Gasentladungslampe (16) geschaltet ist.

13. Ansteuerschaltung (110) nach Anspruch 11, **dadurch gekennzeichnet, dass** die Ansteuerschaltung (110) einen DC/DC-Wandler (28) aufweist und dass die Induktivität (26) in Reihe mit der Gasentladungslampe (16) und parallel zu einer Reihenschaltung aus einem dem Booster-Kondensator (C2) und einem Ladewiderstand (R1) des Booster-Kondensators geschaltet ist.

## Claims

1. A method for operating a gas-discharge lamp (16) in a transition from a turned off state without an electric arc to a stable light-generating state, wherein, in a take-over phase following an ignition-voltage impulse, a booster capacitor (C2) is discharged via a current path that conducts a current flowing through the gas-discharge lamp (16) and in which an inductor (L1) is connected in series with at least one switch (S5); **characterised in that** the booster capacitor (C2) is intermittently discharged by a repeated alternating closing and opening of the switch (S5).

2. The method of claim 1, **characterised in that** the at least one switch (S5) is closed and opened for the intermittent discharge in a time-based controlled manner.

3. The method of claim 2, **characterised in that**, for the intermittent discharge, either only one or both current-conducting switches of an H-bridge are actuated synchronously.

4. The method of claim 3, first alternative, **characterized in that**, for the intermittent discharge, only a potential-wise higher current conducting switch of the H-bridge switch is actuated.

5. The method of claim 3, first alternative, **characterised in that**, for the intermittent discharge, only a potential-wise lower current-conducting switch of the H-bridge switch is actuated.

6. The method of claim 1, **characterised in that** a level of a discharge current is measured and the switch (S5) is then opened if the level exceeds a predetermined first threshold value and is closed if the level falls below a predetermined second threshold value.

7. The method of claim 6, **characterised in that** the first threshold value is determined as a sum of a predetermined reference value and a fraction of a predetermined range of fluctuation and the second threshold value is determined as a difference of the reference value and a predetermined second threshold value.

8. The method of claim 7, **characterised in that** the reference value is predetermined in dependence on either of an output voltage of at least one DC/DC converter (28) charging the booster capacitor (C2) and a residual voltage (U2) via the booster capacitor (C2).

9. The method of claim 1, **characterised in that** the switch (S5) is opened and closed with at least one of a fixed frequency and fixed duty cycle.

10. The method of claim 1, **characterised in that** the switch (S5) is opened and closed with at least one of a variable frequency and variable duty cycle.

11. A control circuit (10) adapted for operating a gas-discharge lamp (16) in a transition from a turned off state without an electric arc to a stable light-generating state, the control circuit comprising a booster capacitor (C2) and being adapted to discharge the booster capacitor (C2) in a take-over phase following an ignition-voltage impulse via a current path that conducts a current flowing through the gas-discharge lamp (16) and in which an inductor (L1) is connected in series with at least one switch (S5), **characterized in that** the control circuit (10) is adapted for intermittently discharging the booster capacitor (C2) by a repeated alternating closing and opening of the switch (S5).

12. The control circuit (10) of claim 11, **characterised in that** the control circuit (10) comprises further a DC/DC converter (28) and the inductor (L1) is connected in series with the booster capacitor (C2) and switch (S5) between two output terminals of the DC/DC converter (28) and in parallel to a series connection including at least one switch (S4) and the gas-discharge lamp (16).

13. The control circuit (10) of claim 11, **characterised in that** the control circuit (10) comprises further a DC/DC converter (28) and the inductor (26) is connected in series with the gas-discharge lamp (16) and in parallel with a series connection including the booster capacitor (C2) and a charging resistor (R1) of the booster capacitor (C2).

## Revendications

1. Procédé de mise en fonctionnement d'une lampe à décharge gazeuse (16) lors de la transition d'un état hors tension sans formation d'arc lumineux à un état générant de la lumière de manière stable, procédé dans lequel un condensateur de rappel (C2) est déchargé pendant une phase de transfert faisant suite à une impulsion de tension d'allumage, par l'intermédiaire d'un trajet de courant qui achemine le courant passant à travers la lampe à décharge gazeuse (16) et dans lequel une inductance (L1) est connectée en série à au moins un commutateur (S5), **caractérisé en ce que** le condensateur de rappel (C2) est déchargé de manière cadencée par fermeture et ouverture alternée et répétée du commutateur (S5).

2. Procédé selon la revendication 1, **caractérisé en ce que** l'au moins un commutateur (S5) est fermé et ouvert de manière commandée dans le temps pour la décharge cadencée.

3. Procédé selon la revendication 2, **caractérisé en ce que**, pour la décharge cadencée, soit seulement un commutateur, soit les deux commutateurs conducteurs de courant d'un pont en H conduisant le courant sont actionnés en synchronisme.

4. Procédé selon la revendication 3, première variante, **caractérisé en ce que** pour la décharge cadencée, seul le commutateur conducteur de courant à potentiel supérieur d'un circuit de pont en H est actionné.

5. Procédé selon la revendication 3, première variante, **caractérisé en ce que** pour la décharge cadencée, seul le commutateur conducteur de courant à potentiel inférieur d'un circuit de pont en H est actionné.

6. Procédé selon la revendication 1, **caractérisé en ce que** l'intensité du courant de décharge est mesurée et **en ce que** l'au moins un commutateur (S5) n'est ouvert que lorsque l'intensité du courant dépasse une première valeur de seuil prédéterminée et est fermé lorsque l'intensité du courant s'abaisse en dessous d'une seconde valeur de seuil prédéterminée.

7. Procédé selon la revendication 6, **caractérisé en ce que** la première valeur de seuil est déterminée comme étant la somme d'une valeur de référence prédéterminée et d'une fraction d'une plage de variation prédéterminée et **en ce que** la seconde valeur de seuil est déterminée comme étant la différence entre la valeur de référence et une seconde valeur de seuil prédéterminée.

8. Procédé selon la revendication 6 ou 7, **caractérisé en ce que** la valeur de référence est prédéterminée en fonction d'une tension de sortie d'un convertisseur continu/continu (28) chargeant le condensateur de rappel (C2) ou d'une tension de repos (U2) aux bornes du condensateur de rappel (C2).

9. Procédé selon la revendication 1, **caractérisé en ce que** l'au moins un commutateur (S5) est ouvert et fermé avec une fréquence fixe et un rapport cyclique fixe.

10. Procédé selon la revendication 1, **caractérisé en ce que** l'au moins un commutateur (S5) est ouvert et fermé avec une fréquence variable et/ou un rapport cyclique variable.

11. Circuit de commande (10) conçu pour mettre en fonctionnement une lampe à décharge gazeuse (16) lors de la transition d'un état hors tension sans formation d'arc lumineux à un état générant de la lumière de manière stable, lequel circuit de commande comprend un condensateur de rappel (C2) et est conçu pour décharger le condensateur de rappel (C2) pendant une phase de transfert faisant suite à une impulsion de tension d'allumage, par l'intermédiaire d'un trajet de courant qui achemine le courant passant à travers la lampe à décharge gazeuse (16) et dans lequel une inductance (L1) est connectée en série à au moins un commutateur (S5), **caractérisé en ce que** le circuit de commande (10) est conçu pour décharger de manière cadencée le condensateur de rappel (C2) par fermeture et ouverture alternée et répétée du commutateur (S5).

12. Circuit de commande (10) selon la revendication 11, **caractérisé en ce que** le circuit de commande (10) comprend un convertisseur continu/continu (28) et **en ce que** l'inductance (L1) est connectée en série avec le condensateur de rappel (C2) et le commutateur (S5) entre deux bornes de sortie du convertisseur continu/continu (28) et en parallèle avec un circuit série constitué d'au moins un commutateur (S4) et de la lampe à décharge gazeuse (16).

13. Circuit de commande (110) selon la revendication 11, **caractérisé en ce que** le circuit de commande (110) comprend un convertisseur continu/continu (28) et **en ce que** l'inductance (26) est connectée en série avec la lampe à décharge gazeuse (16) et en parallèle avec un circuit série constitué du condensateur de rappel (C2) et d'une résistance de charge (R1) du condensateur de rappel.
